# EUROPEAN PATENT SPECIFICATION

(11) **EP 1 117 034 B1**
(45) Date of publication and mention of the grant of the patent: **14.05.2003**
(21) Application number: 00100573.5
(22) Date of filing: 12.01.2000
(51) Int. Cl.: G06F 9/46, G06F 17/30

(54) **Method and system for building up an online service platform and computer program product**
Verfahren und System zum Aufbauen einer online Dienstleistungs-Plattform und Rechnerprogrammprodukt
Méthode et système pour élaborer une plate-forme de services en ligne et progiciel

(43) Date of publication of application: 18.07.2001
(73) Proprietor: Fileants AG, 80798 München (DE)
(72) Inventor: Ovadya, Daniel, 81541 München (DE); Kuhla, Karsten, 82205 Gilching (DE)
(74) Representative: Prüfer, Lutz H., Dipl.-Phys.

(56) References cited:
- EP-A- 0 884 877
- EP-A- 0 921 485
- WO-A-96/15505
- US-A- 5 815 665
- CAMERON I ET AL: "BT WEBWORLD TM-WEB HOSTING FOR EVERY BUSINESS NEED" BRITISH TELECOMMUNICATIONS ENGINEERING,GB,BRITISH TELECOMMUNICATIONS ENGINEERING. LONDON, vol. 16, no. 4, 1998, pages 273-278, XP000736500 ISSN: 0262-401X
- YANG W -L: "A distributed processing architecture for a remote simulation system in a multi-user environment" COMPUTERS IN INDUSTRY,NL,ELSEVIER SCIENCE PUBLISHERS. AMSTERDAM, vol. 40, no. 1, September 1999 (1999-09), pages 15-22, XP004178447 ISSN: 0166-3615
- CODDINGTON P D ET AL: "Web-based access to distributed high-performance geographic information systems for decision support" PROCEEDINGS OF THE 32ND ANNUAL HAWAII INTERNATIONAL CONFERENCE ON SYSTEMS SCIENCES. 1999. HICSS-32. ABSTRACTS AND CD-ROM OF FULL PAPERS, PROCEEDINGS OF HICSS 32 - 32ND ANNUAL HAWAII INTERNATIONAL CONFERENCE ON SYSTEM SCIENCES, MAUI, HI, USA, 5-8 JAN., page 12 pp. XP002146235 1999, Los Alamitos, CA, USA, IEEE Comput. Soc, USA ISBN: 0-7695-0001-3
- AINSLIE B J ET AL: "TINA - A DISTRIBUTED APPROACH TO SERVICE MANAGEMENT" BT TECHNOLOGY JOURNAL,GB,BT LABORATORIES, vol. 17, no. 2, April 1999 (1999-04), pages 95-102, XP000831728 ISSN: 1358-3948
- MAGEDANZ T ET AL: "INTELLIGENT AGENTS AN EMERGING TECHNOLOGY FOR NEXT GENERATION TELECOMMUNICATIONS?" PROCEEDINGS OF INFOCOM,US,LOS ALAMITOS, IEEE COMP. SOC. PRESS, vol. CONF. 15, 24 March 1996 (1996-03-24), pages 464-472, XP000621308 ISBN: 0-8186-7293-5

## Description

The invention relates to a method and a system for building up an online service platform and to a computer program product. In particular the invention relates to a method and a system for offering online file services in the Internet.

An online file service is a service processing all kind of files online. This includes file conversions, translations (spoken or computer languages), or any other service being carried out on a file. In the Internet there are places where software can be acquired and downloaded online. However, using the software online or just purchasing one conversion of a given data file is not possible on these places.

Online data file conversion is known in the Internet but only with respect to use of one single specific conversion program at a specific place in the Internet being provided by the specific provider of the program without offering any possibility for other people using the system for other software tools.

It is an object of the invention to provide a method and a system for building up an online service platform and a corresponding computer program product which allows users to obtain a required data file processing in a simple and time saving manner.

The object is solved by a method according to claim 1, a system according to claim 10 and a computer program product according to claim 11. Further developments of the invention are given in the dependent claims.

The invention provides an open platform in the Internet allowing providers of file processing programs to upload and to install their respective file processing programs for the purpose that they can be used by customers without the provider himself being occupied with the execution of the file processing program, billing and/or payment activities. Further, an administration interface is provided where different option types can be specified: e.g. a target file format and a possible target file format option, for example, if the data file to be processed has a bitmap-format and the target, i.e. processed data file format is aimed to be JPEG with 70% compression. The invention further has the advantage that a uniform billing interface is provided, where a user is charged for all services provided by the platform as well as transferring the money to the software owner.

Further developments of the invention are described in connection with embodiments referring to the accompanying drawings, a brief description of which is:
- Fig. 1: illustrates schematically the general architecture of the system according to the invention;
- Fig. 2: illustrates a flow diagram of a routine relating to placing of an order of a file processing and the file processing;
- Fig. 3: is a flow diagram showing a routine relating to a service administration; and
- Fig. 4: is a block diagram showing the communication inside the server system or of the server system with the external world.

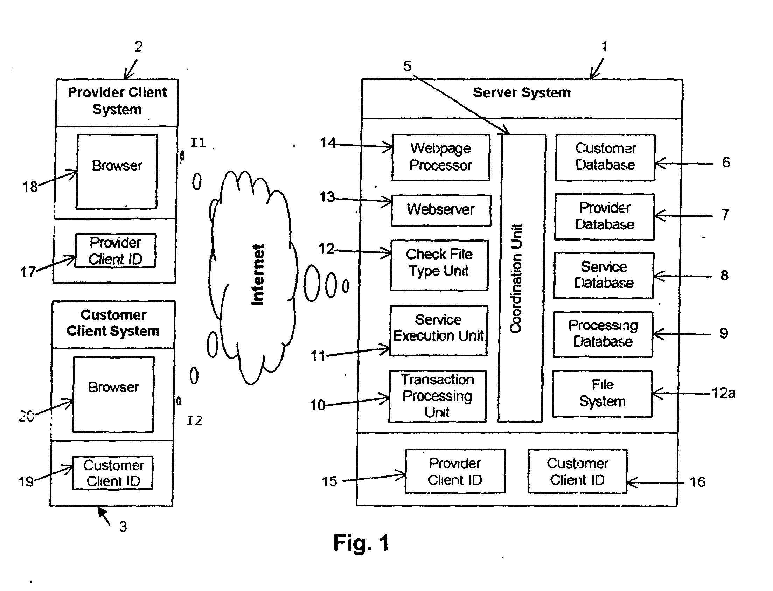

Referring to Fig. 1 a system for building up an online service platform according to the invention includes a server system 1 constituting the online service platform, a provider client system 2 and a user client system 3 communicating with each other via the Internet 4. The system comprises two kinds of interfaces: one interface I1 for communication with the provider client system 2 and one interface I2 for the communication with the customer client system 3 requesting to have a data file processed In Fig. 1 only by way of an example one single provider client system 2 and one single customer client system 3 is shown. However, a plurality of provider client systems 2', 2'' and of customer client systems 3' are present in practice.

The server system 1 consists of different subsystems which are a coordination unit 5 organizing the communication between the different subsystems, a customer data base 6 which holds all the customer or user data, the name, billing information etc., a provider data base 7 which holds all the provider data, name, billing information etc., a service data base 8, which holds the information about the different services including the file processing programs, the file formats, options, pricing plans, a processing data base 9 which contains a log of all conversions especially for statistics and billing purposes, a transaction processing unit 10 which is responsible for secure and consistent transaction regarding money, a service execution unit 11 which is running the services by starting the file processing programs, at check file type unit 12 which recognizes different file types, a webserver 13 providing webserver services for the customer client system 3 and the provider client system 2 and a webpage processor 14 which builds webpages on the fly relying on the data bases and the coordination unit. Further, the server system includes a provider identification (provider client ID) 15 for identifying a provider client system 2 and a customer identification 16 (customer client ID ) identifying a customer client system 3. Further, a file system 12a is provided. A file system is a file storage system on which files can be stored.

The provider client system 2 comprises a provider identification (provider client ID) 17 which is a code identifying the respective provider and a browser 18 which is a special-purpose application program that effects the requesting of webpages and the displaying of webpages. Similarly, the customer client system 3 comprises a customer identification (customer client ID) 19, which is a code identifying the customer client and a browser 20. The server system 1, the provider client system 2 and the customer client system 3 each are built up of one or more computers which are all interconnected through communication links.

Displaying webpages by the browser takes place using HTML (HyperText mark up language) or XML.

The method for building up an online service platform will be explained. First installing of a file processing program provided by a provider client system 2 at the server system 1 is described.

A new program entry is submitted by the provider client system 2 and received by the server system 1. The server system 1 receives provider information including identification of the provider. The server system 1 sends to the provider client system 2 the assigned provider client identification 15 and an HTML document demanding the place and requested operating system of the executables of the file processing program including a send button. The provider client system 2 receives and stores the assigned provider client identification 15 and receives and displays the HTML document. After the selection of the send button the executables including the provider client identification are transmitted to the server system 1. The server system 1 receives the executables, stores them and adds a database entry. Then the server system 1 requests more information about the file processing program (short description), accepted file formats, possible options and pricing plan by sending an HTML document to the provider client system 2 including a send button. The provider client system 2 receives and stores the assigned provider client identification and receives and displays the HTML document. After all information is provided at the provider client system 2 and the selection of the send button, the information including the provider client identification is transmitted to the server system. The server system receives the executables, installs them in a distinct directory and sends the directory and program information to the provider data base 7.

Now, file processing is described.

A file-processing request is submitted by a user at the customer client system 3 and received by the server system 1. The server system 1 receives user information including identification of the customer client system (or the user). The server system 1 sends to the customer client system 3 the assigned customer client identification 19 and an HTML document demanding the location of the data file to be processed including a send button. The customer client system receives and stores the assigned customer client identification 19 and receives and displays the HTML document. After the file location information is provided and the selection of the send button, the data file to be processed including the customer client identification 19 is transmitted to the server system 1. The server system 1 receives the file, stores it in a directory related with the customer client identification or in the customer data base 6 and analyses the format and requests information from the service database 8. The service database 8 provides possible programs and short descriptions. Then the server system 1 sends an HTML document holding information about possible file processing to the customer client system 3 including a send button (with encoded program numbers) for each possibility and the customer client identification. The customer client system 3 receives and displays the HTML document. After selection of one button the information including the client identifier and encoded program number is submitted from the customer client system to the server system 1. The server system 1 receives the information and requests option information and pricing plans about the program using a program identifier from the database. Then the server system 1 submits an HTML document including this information, the customer client identification and a process button to the customer client system 3. The client system receives and displays the HTML document. Then the client or user of the customer client system 3 submits the chosen payment plan including the customer client identification by pressing the process button. The server system 1 calculates the price regarding the pricing plan (may depend of the file size or other file or service specifica), checks the user account for liquidity (by requesting the information from the customer database 6) and sends it with an HTML document including the customer client identification and an accept button to the customer client system 3. The customer client system 3 receives and displays the HTML document. By selecting an accept button a positive message including customer client identification is send to the server system 1. The server system receives this information and starts the file processing. When finished the server system deletes the original file and sends an HTML document to the customer client system 3 with a link to the resulting file. By sending the user account information, the program information and the cost information to the transaction subsystem, money is transferred from a user account to a provider account minus a provision charge being transferred to the service provider (running the server system) account. The customer client system 3 receives and displays the HTML document. By selecting the link the customer client system 3 sends a request for the resulting file to the server system. After a predefined time period the resulting file is deleted from the server system.

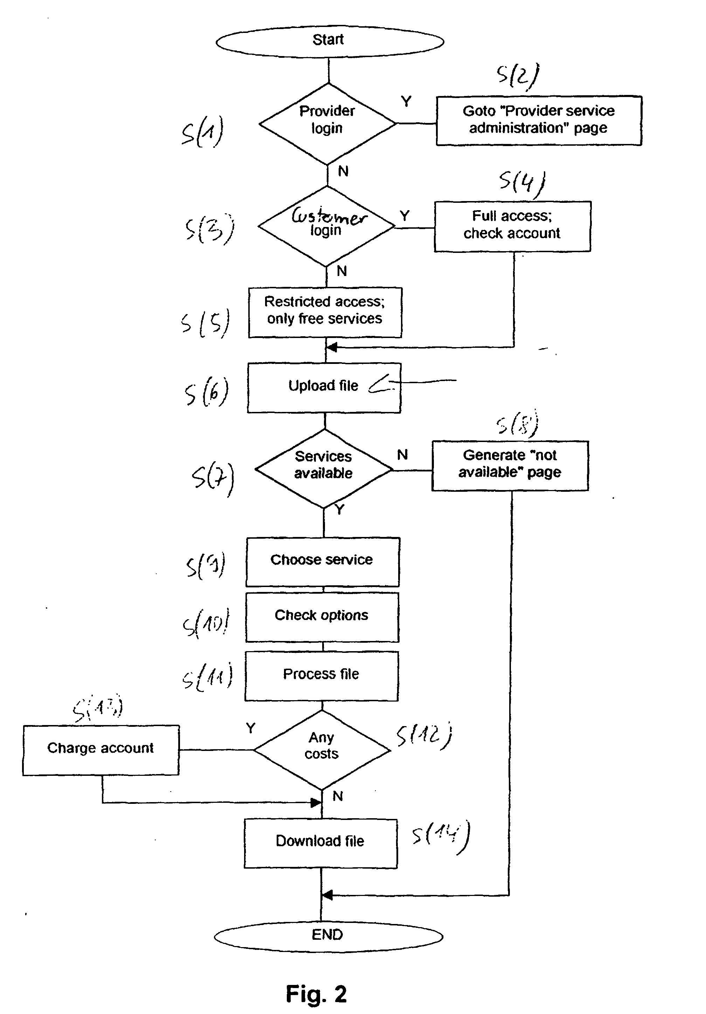

Now, the order of a file processing under control of the server system 1 is described with reference to Fig. 2. In step S(1) it is checked whether a provider is logged in to the server system. If the answer is YES then the next step S(2) is going to the "provider service administration" page. If the answer is NO, then it is checked in step S(3) whether customer login is identified. If the answer is YES, then in step S(4) the user is granted full access to the system. If the answer is NO then the customer has in step S(5) the restricted access to free services only.

Then in S(6) the file to be processed is uploaded. In step S(7) it is checked if services, i.e. appropriate file processing programs are available for this file format. If the answer is NO the process goes to a "not available" page at step S(8). Then in step S(9) the customer can choose one of the services and checks the options in step S(10). In step S(11) the file is processed. In step S(12) it is checked whether any costs-occurred. If the answer is YES, then the customer account is charged in step S(13). If step S(13) is completed or if no costs occurred, the file containing the processed data is downloaded in step S(14).

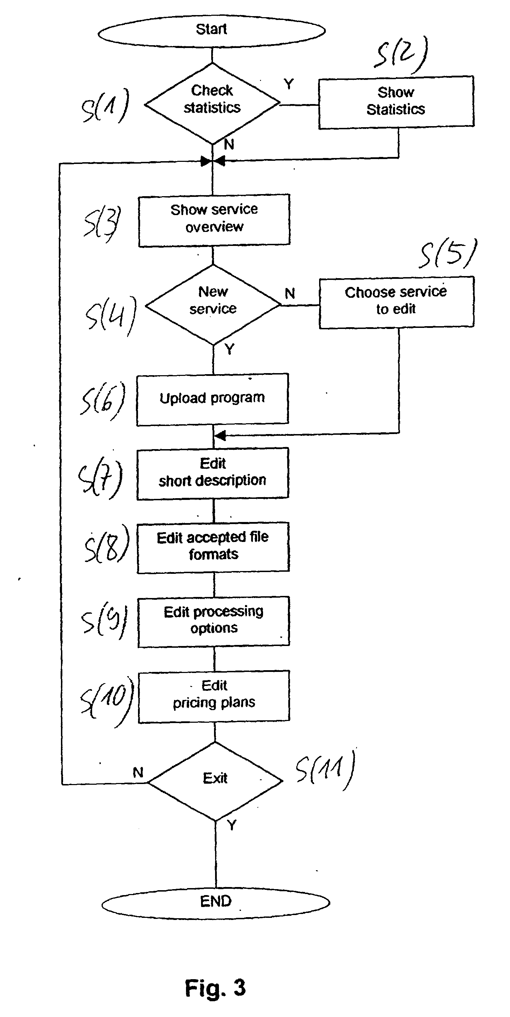

Now the order of a service administration is explained with reference to Fig. 3. In step S(1) statistics are checked. This could be statistics showing the distribution if different programs usage, the distribution of processed file-formats sizes or depending other file information or distribution of use by or turnaround relating to customer information. If statistics are checked the statistics are shown in step S(2). If no statistics have to be checked or if statistics have been shown an overview of the services (file processing programs to be offered) is indicated in step S(3). In step S(4) it is asked whether a new service (file processing program) should be added. If the answer is NO an existing service is chosen to edit in step S(5). If a new service is to be added the file processing program corresponding to the new service is uploaded in step S(6). Then a short description of the program is added/or edited in step S(7) and the list of accepted file formats is entered ins step S(8). In step S(9) processing options are entered, i.e. options that the customer can select. In step S(10) pricing plans are added. In step S(11) the service administration is either left or, if further services are to be added the administration program returns to step S(3).

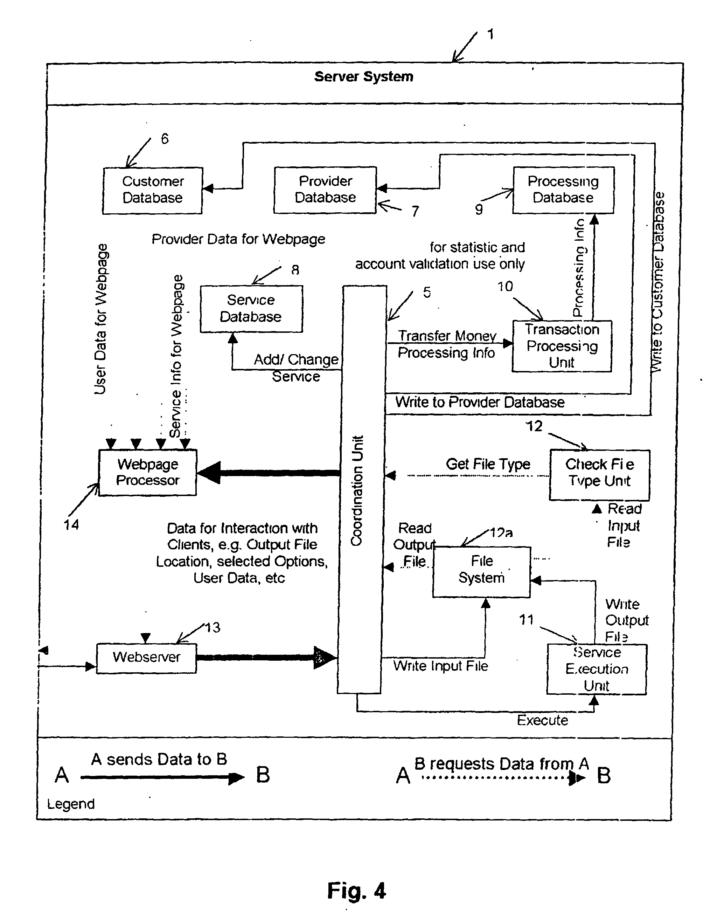

With reference to Fig. 4, all communication inside the service system 1 or of the service system 1 with the provider client system and/or the customer client system is handled and organized by the coordination unit 5. All external communications are led over the webserver 13 and the webpage processor 14 builds all webpages dynamically controlled by the coordination unit 5 and depending on information of the coordination unit 5 and the data bases mentioned. In Fig. 4 a full line indicates that data are sent from a respective unit A to a respective unit B. A dotted line indicates that a respective unit B requests data from a respective unit A. The communication with the provider client system 2 and with the customer client system 3 takes place via the webserver 13.

The actions between the units are summarized in the following table. Table 1 shows the actions with respect to the provider client system 2 and the server system 1 in tableform.

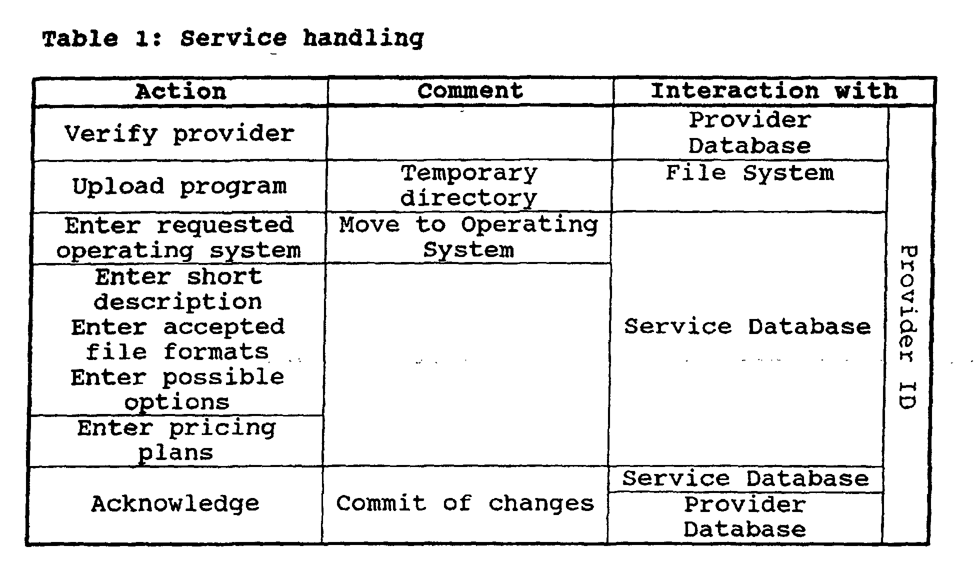

Table 2 shows the actions in connection with an interaction between the customer client system 3 and the server system 1.

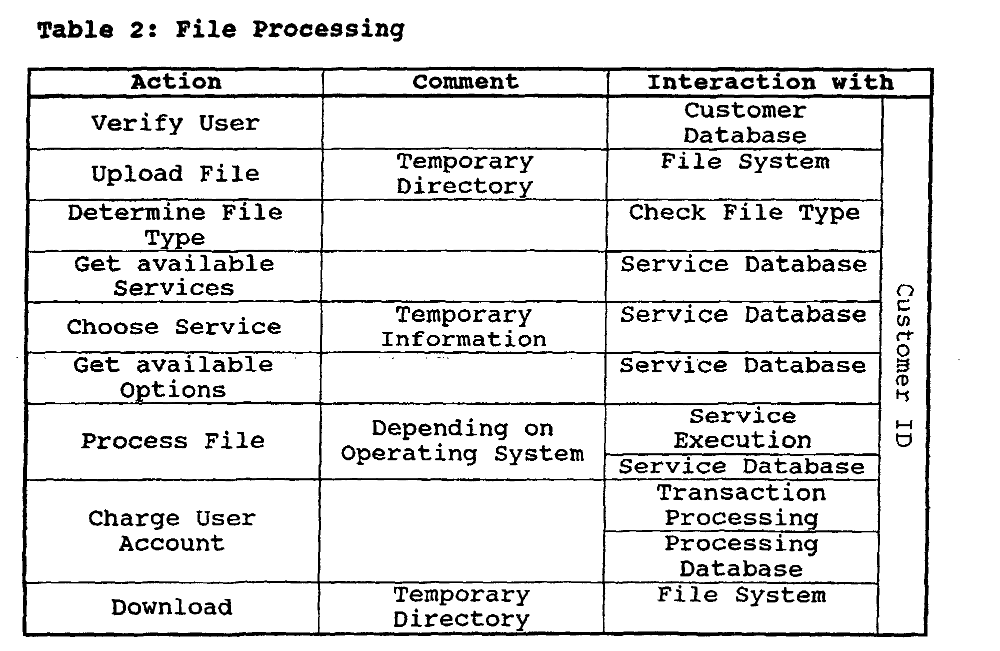

In a specific embodiment the method provides the possibility of supporting different processing options. This embodiment is explained by means of the example of a translation service using a file processing program "translate.exe" and by means of a graphic converter file processing using a graphic converter program "grconv.exe"

The provider client system defines for example the following items:
- **Program:** which executable is to be started
- **Optional:** (must/can) defines if the parameter is optional or necessary
- **Type:** (predefined/numeric/alphanumeric/Boolean) Type of the parameter
- **Option:** ParameterX defines the Option level:
   ◆ In "grconv.exe /JPG 70"
      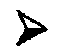 /JPG is Parameter1 and
      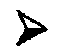 70 is Parameter1.2 as it is belonging to Parameter1
   ◆ In "translate.exe /source e /target f"
      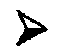 /source is Parameter1
      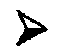 e is Parameter 1.2
      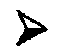 /target is Parameters
      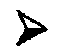 f is Parameter 2.1
- **Meaning:** Is the string being used in the web user interface for the user
- **Comment:** a comment

As there are always possibilities where a parameter requires special values on other parameters or where one parameter excludes other values (e.g. translation English to English). To fulfil this requirements a matrix is implemented. Following is an example for translations:

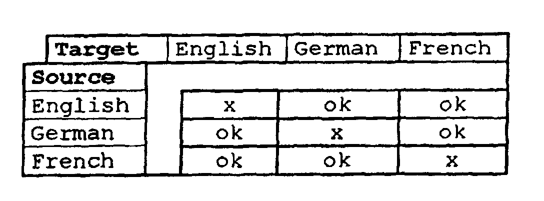

The internal representation of processing options defined by the provider is e.g. as follows (of course this information is entered by the provider with the help of a conformable web user interface) :

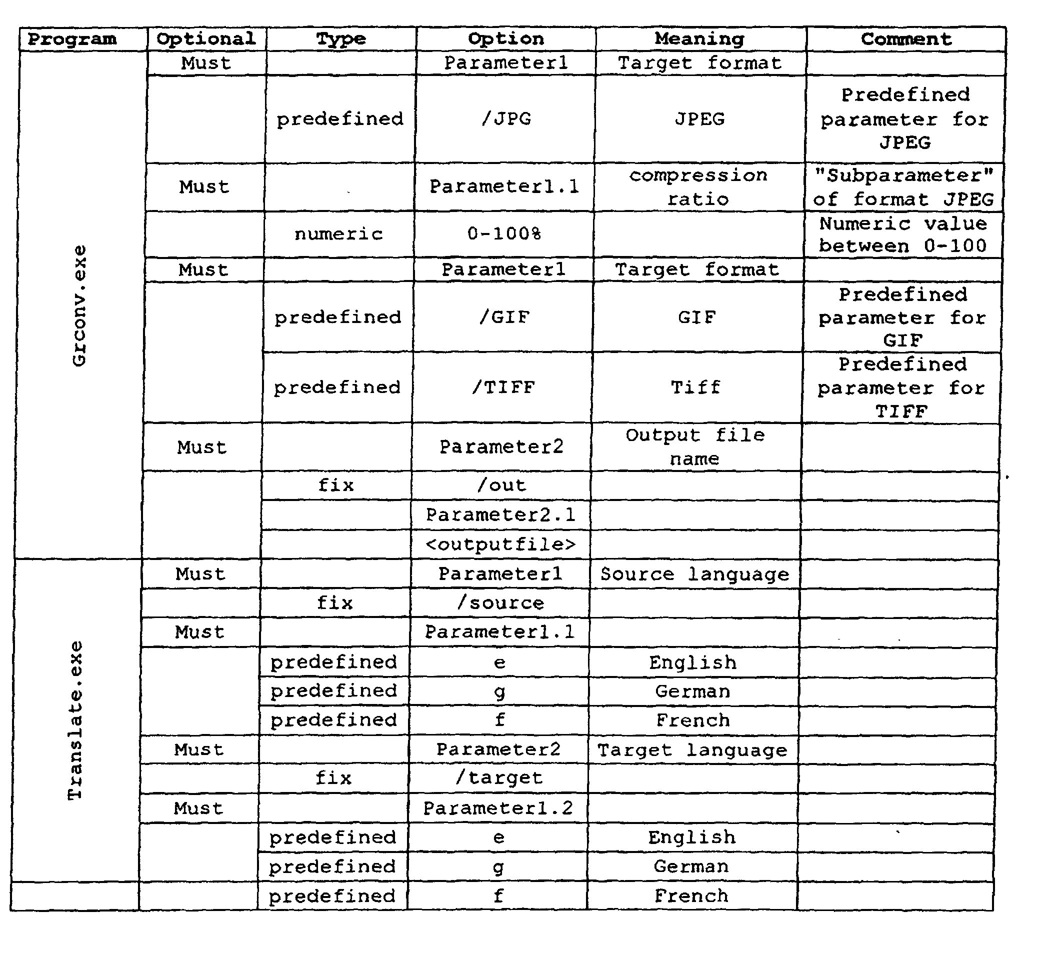

For the user results:

When submitting a graphic file:
- a combo box called "Target Format" with the alternatives: "JPEG", "GIF", "TIFF"
- when "JPEG" is chosen a numeric field "compression ratio" appears where the a number between 0 and 100 can be entered;
when submitting a text file:
- a combo box called "Source" with the alternatives: "English", "German", "French"
- a combo box called "Target" with the alternatives: "English", "German", "French"
where the one selected as Source is not longer shown for Target.

In a further specific embodiment the calculation of the fees can be based on either the file size, the lines of codes, the words or characters, the CPU usage, the memory usage or whatever appropriate.

A computer program product for building up an online service platform is a computer readable medium containing instructions for causing the server system to perform the method for building up an online service platform as described above. The computer program product can also be a computer program being directly loadable into a memory of a computer. The computer (could also be a whole system of linked computers) is included in the server system 1.

## Claims

1. A method for building up an online service platform in which a data file is processed by a server system (1) upon request by a customer client system (3), the method comprising:
providing at least one file processing program by at least one provider client system (2) to said server system (1) ; storing said at least one file processing program on said server system (1),
transmitting said data file from said customer client system to said server system ;
placing a request for processing said data file at said server system (1) ;
receiving the request and processing said data file using one of said at least one file processing programs by said server system (1), thereby generating processed data; and providing processed data to said customer client system (3).

2. The method of claim 1, wherein a plurality of file processing programs are provided by a plurality of provider systems (2) to said server system (1) and stored on said server system (1).

3. The method of claim 1 or 2, wherein a file processing program is one of the group containing a text data format conversion program, a graphic data format conversion program, a computer language translation program, a foreign language translation program, an audio data conversion program and others.

4. The method of one of claims 1 to 3, wherein the step of providing at least one file processing program by a provider system (2) to the server system (3) comprises:
receiving provider client information including identification of the provider and information of the file processing program by the server system (1);
sending from the server system (1) a provider client identifier to the provider client (2) and requesting information about the required memory space and operating system for said file processing program from the provider client system (2);
sending the required information and executables of the file processing program from the provider client system (2) to the server system (1).

5. The method of one of claims 1 to 4, wherein the step of placing said request for data file processing comprises:
sending customer client information including a customer client identification and information about the data file to be processed from the customer client system (3) to the server system (1);
receiving the customer client information by the server system (1);
providing information about an appropriate file processing program to said client server system (3);
placing the request for data file processing by sending an accept message to the server system (1) from the customer client system (3).

6. The method of one of claims 1 to 5, wherein the step of providing the processed data to the customer client system (3) includes:
sending an information to the customer client system (3) with a link to a file containing the processed data.

7. The method of one of claims 1 to 6, **characterised in that** the server system (1) sends a payment plan to the customer client system (3) and that file processing is carried out only if the server system (1) receives an accept message stating acceptance of the payment plan.

8. The method of one of claims 1 to 7, wherein the customer client system (3), the provider client system (2) and the server system (1) communicate via the Internet.

9. The method of one of claims 1 to 8, wherein information communicated over the Internet is displayed via HTML-documents or via XML-documents.

10. A system for building up an online service platform for providing online file processing, the system comprising a server system (1) including
a data storage unit (7, 9) for storing executables of at least one file processing program;
an execution unit (11) for executing a data file processing according to one of the stored at least one file processing programs;
an interface (I2) for receiving a data file processing order and a data file to be processed from a customer client system (3) and
an interface (I2) for receiving the at least one file processing program from said at least one provider client system (2); and
a coordination unit (5) for assigning the appropriate file processing program to said data file to be processed and for causing the execution unit (11) to execute the file processing on said data file using said file processing program.

11. A computer readable medium containing instructions for causing a computer system to perform the method of one of claims 1 to 9.

## Patentansprüche

1. Verfahren zum Aufbauen einer Online-Serviceplattform, auf der eine Datei durch ein Serversystem (1) auf Anforderung eines Anwenderkundensystem verarbeitet wird, wobei das Verfahren aufweist:
Bereitstellen wenigstens eines Dateiverarbeitungsprogramms durch wenigstens ein Providerkundensystem (2) an das Serversystem (1) ;
Speichern des wenigstens einen Dateiverarbeitungsprogramms auf dem Serversystem (1),
Übertragen der Datei von dem Anwenderkundensystem auf das Serversystem;
Plazieren einer Anforderung zum Verarbeiten der Datei bei dem Serversystem (1);
Empfangen der Anforderung und Verarbeiten der Datei unter Verwendung eines der wenigstens einen Dateiverarbeitungsprogramme durch das Serversystem (1), dadurch Erzeugen verarbeiteter Daten; und
Bereitstellen verarbeiteter Daten an das Anwenderkundensystem (3).

2. Verfahren nach Anspruch 1, bei dem eine Mehrzahl von Dateiverarbeitungsprogrammen durch eine Mehrzahl von Providersystemen (2) dem Serversystem (1) bereitgestellt werden und auf dem Serversystem (1) gespeichert werden.

3. Verfahren nach Anspruch 1 oder 2, wobei ein Dateiverarbeitungsprogramm eines ist aus der Gruppe, die enthält ein Textdatenformatkonvertierungsprogramm, ein Grafikdatenformatkonvertierungsprogramm, ein Computersprachenübersetzungsprogramm, ein Fremdsprachenübersetzungsprogramm, ein Audiodatenkonvertierungsprogramm und andere.

4. Verfahren nach einem der Ansprüche 1 bis 3, wobei der Schritt des Bereitstellens wenigstens eines Dateiverarbeitungsprogramms durch ein Providersystem (2) an das Serversystem (3) beinhaltet:
Empfangen von Providerkundeninformation beinhaltend eine Identifizierung des Providers und Information über das Dateiverarbeitungsprogramm durch das Serversystem (1),
Senden von dem Serversystem (1) eine Providerkundenkennung an den Providerkunden (2) und Anfordern von Information über den erforderlichen Speicherplatz und das Betriebssystem für das Dateiverarbeitungsprogramm von dem Providerkundensystem (2) ;
Senden der erforderlichen Information und einer ausführbaren Version des Dateiverarbeitungsprogramms von dem Providerkundensystem (2) an das Serversystem (1).

5. Verfahren nach einem der Ansprüche 1 bis 4, wobei der Schritt des Plazierens der Anforderung für die Dateiverarbeitung beinhaltet:
Senden von Anwenderkundeninformation beinhaltend eine Anwenderkundenidentifizierung und Information über die zu verarbeitende Datei von dem Anwenderkundensystem (3) an das Serversystem (1) ;
Empfangen der Anwenderkundeninformation durch das Serversystem (1) ;
Bereitstellen von Information über ein geeignetes Datenverarbeitungsprogramm an das Kundenserversystem (3) ;
Plazieren der Anforderung für die Dateiverarbeitung durch Senden einer Quittierungsbotschaft an das Serversystem (1) von dem Anwenderkundensystem (3).

6. Verfahren nach einem der Ansprüche 1 bis 5, wobei der Schritt des Bereitstellens der verarbeiteten Daten an das Anwenderkundensystem (3) beinhaltet:
Senden einer Information an das Anwenderkundensystem (3) mit einer Verbindung zu einer Datei, die die verarbeiteten Daten enthält.

7. Verfahren nach einem der Ansprüche 1 bis 6, **dadurch gekennzeichnet, daß** das Serversystem (1) einen Bezahlungsplan an das Anwenderkundensystem (3) sendet und daß die Dateiverarbeitung nur ausgeführt wird, wenn das Serversystem (1) eine Quittierungsbotschaft empfängt, die die Annahme des Bezahlungsplans angibt.

8. Verfahren nach einem der Ansprüche 1 bis 7, wobei das Anwenderkundensystem (3), das Providerkundensystem (2) und das Serversystem (1) über das Internet kommunizieren.

9. Verfahren nach einem der Ansprüche 1 bis 8, wobei die Information, die über das Internet übertragen wird, über HTML-Dokumente oder über XML-Dokumente angezeigt wird.

10. Ein System zum Aufbauen einer Online-Serviceplattform zum Bereitstellen einer Online-Dateiverarbeitung, wobei das System ein Serversystem (1) aufweist, welches beinhaltet:
eine Datenspeichereinheit (7, 9) zum Speichern von ausführbaren Versionen von wenigstens einem Dateiverarbeitungsprogramm;
einer Ausführungseinheit (11) zum Ausführen einer Dateiverarbeitung entsprechend einem der gespeicherten wenigstens einen Dateiverarbeitungsprogramme;
ein Interface (I2) zum Empfangen eines Dateiverarbeitungsauftrags und einer zu verarbeitenden Datei von einem Anwenderkundensystem (3), und
im Interface (I2) zum Empfangen des wenigstens einen Dateiverarbeitungsprogramms von dem wenigstens einen Providerkundensystem (2) ; und
einer Koordinationseinheit (5) zum Zuordnen des geeigneten Dateiverarbeitungsprogramms zu der zu verarbeitenden Datei und zum Verursachen, daß die Ausführungseinheit (11) die Dateiverarbeitung an der Datei ausführt unter Verwendung des Dateiverarbeitungsprogramms.

11. Ein computerlesbares Medium, welches Befehle beinhaltet, die bewirken, daß ein Computersystem das Verfahren nach einem der Ansprüche 1 bis 9 durchführt.

## Revendications

1. Procédé pour élaborer une plate-forme de services en ligne dans laquelle un fichier de données est traité par un système serveur (1) après requête par un système de client consommateur (3), le procédé comprenant le fait de :
fournir au moins un programme de traitement de fichier par au moins un système client fournisseur (2) audit système serveur (1) ;
stocker ledit au moins un programme de traitement de fichier sur ledit système serveur (1),
transmettre ledit fichier de données depuis ledit système client consommateur audit système serveur ;
placer une requête pour traiter ledit fichier de données au niveau dudit système serveur (1) ;
recevoir la requête et traiter ledit fichier de données en utilisant l'un desdits au moins un programme de traitement de fichiers par ledit système serveur (1), générant ainsi des données traitées ; et fournir des données traitées audit système client consommateur (3).

2. Procédé selon Ia revendication 1, dans lequel une pluralité de programmes de traitement de fichier sont fournis par une pluralité de systèmes fournisseur (2) audit système serveur (1) et stockés sur ledit système serveur (1).

3. Procédé selon la revendication 1 ou la revendication 2, dans lequel un programme de traitement de fichier est l'un parmi le groupe comprenant un programme de conversion de format de données textuelles, un programme de conversion de format de données graphiques, un programme de traduction de langage informatique, un programme de traduction de langue étrangère, un programme de conversion de données audio et autres.

4. Procédé selon l'une des revendications 1 à 3, dans lequel l'étape consistant à fournir au moins un programme de traitement de fichier par un système fournisseur (2) au système serveur (3) comprend le fait de :
recevoir des informations client fournisseur comprenant :
l'identification du fournisseur et des informations du programme de traitement de fichier par le système serveur (1) ;
envoyer depuis le système serveur (1) un identificateur client fournisseur au client fournisseur (2) et requérir des informations concernant l'espace de mémoire requis et le système d'exploitation pour ledit programme de traitement de fichier depuis le système client fournisseur (2) ;
envoyer les informations requises et des exécutables du programme de traitement de fichier depuis le système client fournisseur (2) au système serveur (1).

5. Procédé selon l'une des revendications 1 à 4, dans lequel l'étape consistant à placer ladite requête pour le traitement du fichier de données comprend le fait de :
envoyer des informations client consommateur comprenant une identification client consommateur et des informations concernant le fichier de données à traiter depuis le système client consommateur (3) au système serveur (1) ;
recevoir les informations client consommateur par le systéme serveur (1) ;
fournir des informations concernant un programme de traitement de fichier approprié audit système serveur client (3) ;
placer la requête pour le traitement de fichier de données en envoyant un message d'acceptation au système serveur (1) depuis le système client consommateur (3).

6. Procédé selon l'une des revendications 1 à 5, dans lequel l'étape consistant à fournir les données traitées au système client consommateur (3) comprend le fait de :
envoyer une information au système client consommateur (3) avec un lien vers un fichier contenant les données traitées.

7. Procédé selon l'une des revendications 1 à 6, **caractérisé en ce que** le système serveur (1) envoie un plan de paiement au système client consommateur (3) et **en ce que** le traitement du fichier est effectué seulement si le système serveur (1) reçoit un message stipulant l'acceptation du plan de paiement.

8. Procédé selon l'une des revendications 1 à 7, dans lequel le système client consommateur (3), le système client fournisseur (2) et le système serveur (1) communiquent via Internet.

9. Procédé selon l'une des revendications 1 à 8, dans lequel des informations communiquées par Internet sont affichées via des documents HTML ou via des documents XML.

10. Système pour élaborer une plate-forme de services en ligne pour fournir un traitement de fichier en ligne, le système comprenant un système serveur (1) comprenant :
une unité de stockage de données (7, 9) pour stocker des exécutables d'au moins un programme de traitement de fichier ;
une unité d'exécution (11) pour exécuter un traitement de fichier de données selon l'un des au moins un programme de traitement de fichier stocké ;
une interface (I2) pour recevoir un ordre de traitement de fichier de données et un fichier de données à traiter depuis un système client consommateur (3) et
une interface (I2) pour recevoir le au moins un programme de traitement de fichier depuis ledit au moins un système client fournisseur (2) ; et
une unité de coordination (5) pour assigner le programme de traitement de fichier approprié audit fichier de données à traiter et pour amener l'unité d'exécution (11) à exécuter le traitement de fichier sur ledit fichier de données en utilisant ledit programme de traitement de fichier ;

11. Support informatique lisible par ordinateur contenant des instructions pour amener un système informatique à effectuer le procédé de l'une des revendications 1 à 9.
